# EUROPÄISCHE PATENTSCHRIFT

(11) **EP 0 483 064 B1**
(45) Veröffentlichungstag und Bekanntmachung des Hinweises auf die Patenterteilung: **27.07.1994**
(21) Anmeldenummer: 91810804.4
(22) Anmeldetag: 18.10.1991
(51) Int. Cl.: B24B 21/00, B24B 19/14, B24B 45/00, B24B 41/00

(54) **Bearbeitungszentrum zum Schleifen von Werkstücken mit komplex geformten Oberflächen**
Machining centre for grinding workpieces with complex formed surfaces
Centre d'usinage pour le meulage de pièces ayant des surfaces de forme complexe

(30) Priorität: 25.10.1990 CH 3416/90
(43) Veröffentlichungstag der Anmeldung: 29.04.1992
(73) Patentinhaber: MASCHINENFABRIK LIECHTI & CO. AG, CH-3550 Langnau im Emmental (CH)
(72) Erfinder: Liechti, Kurt, CH-3550 Langnau im Emmental (CH); Liechti, Ralph, CH-3074 Muri (CH); Fritz, Lehmann, CH-3550 Langnau im Emmental (CH)
(74) Vertreter: Fischer, Franz Joseph

(56) Entgegenhaltungen:
- EP-A- 0 165 143
- EP-A- 0 318 966
- FR-A- 2 629 747
- US-A- 4 958 463

## Beschreibung

Die vorliegende Erfindung bezieht sich auf ein Bearbeitungszentrum zum Schleifen von Werkstücken mit komplex geformten Oberflächen gemäss dem Oberbegriff des Patentanspruches 1. Ein solches Bearbeitungszentrum ist der FR-A-2 629 747 zu entnehmen.

Schaufeln für Dampfturbinen, Kompressoren und Triebwerke sowie Flugzeugpropeller weisen komplex geformte Oberflächenstrukturen auf. Solche Teile werden in aufwendigen Bearbeitungszentren mit mehreren numerisch gesteuerten Achsen üblicherweise durch Fräsen hergestellt. Sowohl das Werkstück wie auch das Fräswerkzeug sind in ihren Vorschub- und Zustellbewegungen durch eine aufwendige Software über die genannten numerisch gesteuerten Achsen gesteuert. Nach dem Herstellen solcher genannter Teile sind auf der Oberfläche Frässpuren und Fräsrillen sichtbar. Diese müssen heute meistens noch in aufwendiger Handarbeit durch Schleifen entfernt werden. Es liegt auf der Hand, dass eine solche manuelle Tätigkeit an Präzisionsteilen durch qualifiziertes Personal ausgeführt werden muss. Diese Arbeit ist nicht nur zeitsondern auch kostenintensiv und birgt zudem die Gefahr in sich, dass in die Oberfläche Fehler eingeschliffen werden. Solche Fehler können beispielsweise ungewollte Vertiefungen sein, die im späteren Gebrauch des montierten Fertigteiles, sei es in einer Turbine oder in einem Triebwerk, zu einer Wirkungsgradreduktion führen kann.

Heute ist auf dem Markt nur eine Turbinenschaufelschleifmaschine bekannt. Diese weist einen an einem Ständer montierten Schleifkopf auf, in dem ein Endlosschleifband untergebracht ist. Das Schleifband ist zum Bearbeiten eines Werkstückes um eine dem letzteren zugewandte Kontaktscheibe geschlauft. Die Maschine ist im weiteren mit sechs mechanischen Bewegungsachsen ausgerüstet, wovon eine für den Werkstücklängsvorschub (X-Achse), eine für den Schleifkopfquervorschub (Y-Achse), eine für die Werkstückdrehbewegung (A-Achse), eine für die Schleifkopfneigung (B-Achse) sowie eine zum Verändern eines Schwenkwinkels des Schleifkopfes (C-Achse). Die Bewegung des Schleifkopfes senkrecht zur Werkstücklängsachse (Z-Achse) ist nicht auf Mass gesteuert. Der Schleifkopf ist pendelnd aufgehängt. Der Anpressdruck des Schleifbandes an das Werkstück erfolgt pneumatisch, wobei das Schleifband der vorgegebenen Kontur am Werkstück nachläuft. Es handelt sich hier um ein sogenanntes Nachlaufschleifen.

Obschon diese Turbinenschaufelschleifmaschine gegenüber der manuellen Bearbeitung Zeitvorteile bringt, birgt sie doch noch einige Nachteile in sich. Da es sich, wie bereits gesagt, um ein Nachlaufschleifen handelt, bei dem das Schleifband der durch den Herstellprozess vorgegebenen Kontur des Werkstückes nachläuft, ist eine Korrektur von Formfehlern oder von geometrischen Abweichungen zur Sollform nicht möglich. Es kann mit dieser Maschine einzig eine reine Oberflächenverbesserung erreicht werden.

Beim Uebergang des Schrubbschleifens zum Feinschleifen oder zum Polierschleifen sind in der bekanntgewordenen Maschine längerdauernde Stillstandzeiten von Nöten, da das Endlosband im Schleifkopf ausgewechselt werden muss.

Das Arbeiten mit der Turbinenschaufelschleifmaschine erfordert die dauernde Anwesenheit einer Bedienungsperson.

Im Dokument FR-A-2 629 747 ist eine Endbearbeitungsmaschine für gegossene oder bearbeitete Werkstücke offenbart. In einem Schleifkopf, der relativ zu einem drehbar eingespannten Werkstück in fünf Achsen verstellbar ist, ist ein Endlosschleifband eingespannt. Da nur ein einseitiges Festhalten des Werkstückes vorgesehen ist, eignet sich die Maschine nicht zum Bearbeiten von sehr langen Werkstücken. Ein einfaches oder gar automatisches Auswechseln des Schleifkopfes ist nicht vorgesehen. Zum Grob- oder Feinschleifen muss das Endlosschleifband getauscht werden. Das Endlosschleifband ist neben der Schleifkopflängsachse (D) angeordnet. Deshalb wird die Auflagefläche Schleifband - Werkstück beim Drehen des Schleifkopfes um die genannte Achse verschoben. Formfehler können dadurch entstehen.

Es ist die Aufgabe der vorliegenden Erfindung, die aufgezeigten Mängel zu beseitigen. Insbesondere gilt es, eine Maschine zu schaffen, die beim Schleifen von vorstehend genannten Teilen mit komplex geformten Oberflächen geeignet ist, um Formfehler oder geometrische Abweichungen von der Sollform, die während dem Fertigungsprozess entstanden sein können, zu korrigieren und die im weiteren den Schleifprozess dadurch optimiert, dass die Stillstandzeiten äusserst kurz sind und dass die dauernde Anwesenheit einer Bedienungsperson nicht erforderlich ist.

Diese Aufgabe wird mit einem Bearbeitungszentrum zum Schleifen von Werkstücken mit komplex geformten Oberflächen gelöst, das die im kennzeichnenden Teil des Patentanspruches 1 aufgeführten Merkmale aufweist.

Vorteilhafte Ausführungsformen sowohl des Bearbeitungszentrums als auch des Schleifkopfes sind je in den unabhängigen Patentansprüchen zugeordneten abhängigen Ansprüchen aufgeführt.

Die Erfindung wird im folgenden anhand von Figuren beispielsweise näher beschrieben. Es zeigen
Fig. 1 eine isometrische Darstellung eines erfindungsgemässen Bearbeitungszentrums in einer Nullpositionsstellung,
Fig. 2 das Bearbeitungszentrum der Fig. 1 in einer Stellung zum Wechseln der Schleifköpfe,
Fig. 3 eine Seitenansicht einer Tragvorrichtung des Bearbeitungszentrums,
Fig. 4 eine Vorderansicht der in der Fig. 3 gezeigten Tragvorrichtung,
Fig. 5 eine Seitenansicht eines in der Tragvorrichtung eingesetzten Schleifkopfes, und
Fig. 6 verschiedene Schleifkopfstellungen zum Bearbeiten eines Werkstückes, wobei vom Schleifkopf nur dessen unteres, dem Werkstück zugewandtes Ende dargestellt ist.

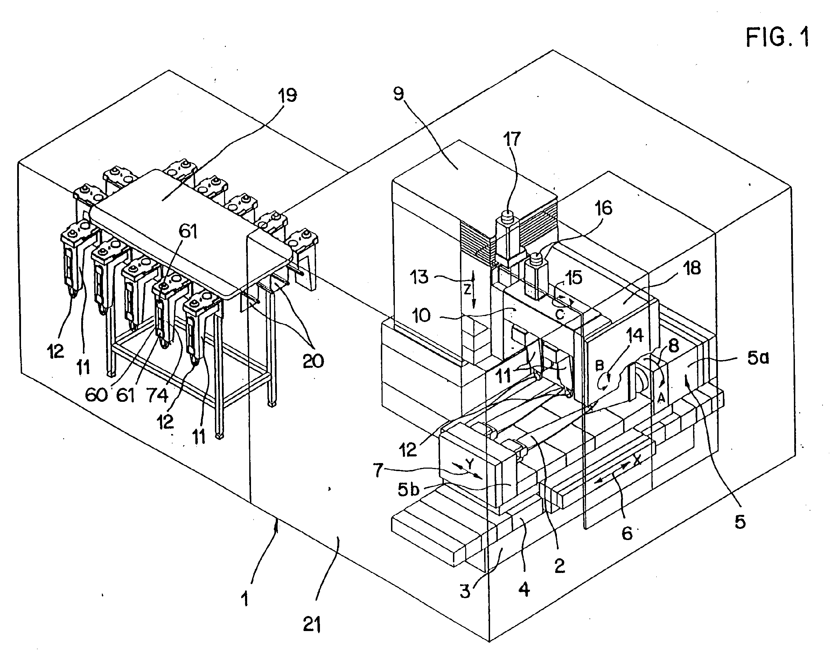

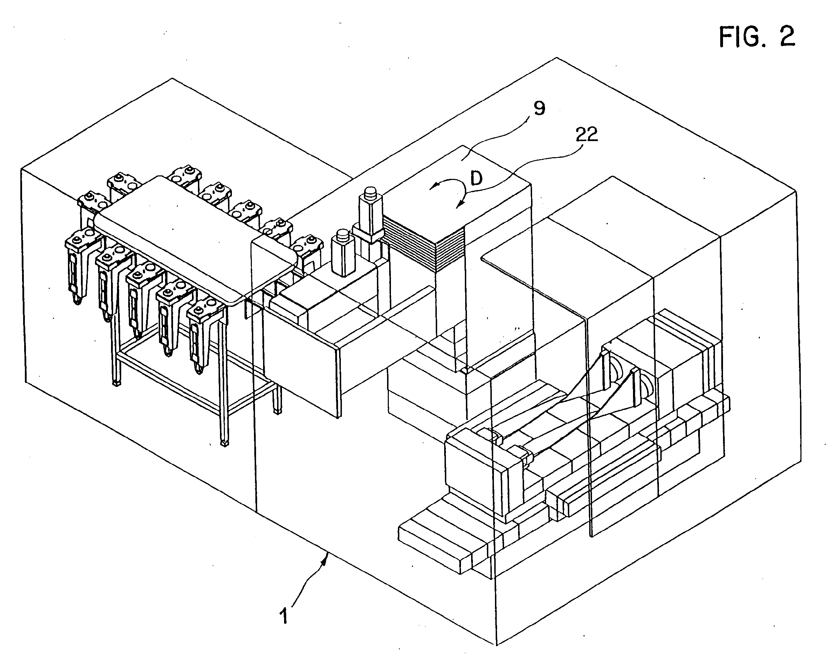

Anhand der Fig. 1 und 2 soll zuerst der Aufbau und die Funktionsweise eines bevorzugten Ausführungsbeispieles eines erfindungsgemässen Bearbeitungszentrums 1 zum Schleifen von Werkstücken 2 mit komplex geformten Oberflächen beschrieben werden. Solche Werkstücke 2, beispielsweise Turbinen- oder Triebwerkschaufeln sowie Propellerblätter, sind im gezeigten Bearbeitungszentrum 1 in einer Werkstückeinspannvorrichtung 5 im eingespannten Zustand dargestellt. Die Werkstückeinspannvorrichtung 5 ist auf einem Kreuzschlitten 4 angeordnet, welcher letztere auf einem Maschinenbett 3 montiert ist. Mittels des Kreuzschlittens 4, der zweinumerisch gesteuerte Achsen umfasst, ist die Werkstückeinspannvorrichtung 5 in einer ersten horizontalen Richtung, der X-Achsenrichtung 6, und in einer zweiten horizontalen Richtung, der Y-Achsenrichtung 7, bewegbar. Die X-Achse und die Y-Achse stehen rechtwinklig zueinander. Die Werkstückeinspannvorrichtung 5 weist einen rechten Support 5a und einen linken Support 5b auf, zwischen welchen eines oder mehrere Werkstücke 2 eingespannt sind. Die beiden Supports 5a, 5b sind zum Einspannen von Werkstücken unterschiedlicher Länge in der X-Achsenrichtung gegeneinander verschiebbar gebaut. In jedem Support sind Einspannmittel, beispielsweise Zweibackenfutter, zum drehbaren Festhalten der Enden der Werkstücke 2 vorhanden. Im gezeigten Ausführungsbeispiel ist im rechten Support 5a ein Antrieb vorgesehen, um die dargestellten zwei Werkstücke 2 in eine Drehbewegung zu versetzen. Diese Drehbewegung ist ebenfalls numerisch gesteuert, was durch die mit A bezeichnete Drehachse 8 angedeutet ist. Das Maschinenbett 3 umfasst im weiteren einen Ständer 9, an dem ausladend eine über die Werkstücke 2 ragende Tragvorrichtung 10 in einer numerisch gesteuerten vertikalen Z-Achsenrichtung 13 verschiebbar befestigt ist. In der Tragvorrichtung 10 sind zwei Schleifköpfe 11 auswechselbar eingesetzt. Jeder der Schleifköpfe umfasst ein Schleifmittel 12, das im gezeigten Ausführungsbeispiel ein Endlosschleifband ist. In der Tragvorrichtung 10 angeordnete gesteuerte Mittel zum Festhalten der Schleifköpfe 11 ermöglichen einen automatischen Schleifkopfwechsel. Die hier erwähnten Festhaltemittel sind weiter hinten genau beschrieben.

Die Tragvorrichtung 10 umfasst im weiteren ein erstes Antriebsmittel 16, beispielsweise einen Elektromotor mit dem über, in diesen Figuren nicht sichtbaren Kopplungsmitteln, die Schleifmittel 12 in den Schleifköpfen stufenlos antreibbar sind. Die Tragvorrichtung 10, die sich in der Schleifstellung in der Y-Achsenrichtung vom Ständer 9 wegerstreckt, umfasst einen Schleifkopftragteil 23, der an einem Tragwinkel 18 neigbar gelagert ist. Die Neigungsachse verläuft in der genannten Stellung des Tragteiles 10 parallel zur Y-Achsenrichtung und ist, wie mit B angedeutet, ebenfalls eine numerisch gesteuerte Achse 14. Ein zweites an der Tragvorrichtung 10 angeordnetes Antriebsmittel 17, beispielsweise ein Servomotor, ist wie weiter hinten gezeigt zum Einstellen des Neigungswinkels des Schleifkopftragteiles 23 bestimmt. Dieser Neigungswinkel kann gegenüber der Z-Achsenrichtung wenigstens +/- 45° betragen.

In den Fig. 1 und 2 nicht sichtbar ist im Schleifkopftragteil 23 der Tragvorrichtung 10 ein drittes Antriebsmittel eingebaut, welches dafür bestimmt ist, dass jeder der Schleifköpfe um eine weitere, mit C bezeichnete numerisch gesteuerte Achse 15 um einen beliebigen Winkel drehbar ist. Diese letztere Achse ist je eine Schleifkopflängsachse und verläuft bei einem Neigungswinkel von 0° des Schleifkopftragteiles 23 parallel zur Z-Achsenrichtung.

Oertlich versetzt zum Maschinenbett 3 ist ein Werkzeugmagazin 19 aufgestellt, in welchem mehrere Schleifköpfe 11 mit unterschiedlichen Schleifmitteln 12 an Tragelementen 20 gehalten sind. Zum Austauschen der Schleifköpfe ist der Ständer 9, wie in der Fig. 2 gezeigt, um eine weitere mit D bezeichnete Achse 22 schwenkbar. Die Tragvorrichtung 10, insbesondere der Schleifkopftragteil 23, gelangt durch diese Schwenkstellung in eine zu den in den Fig. 1 und 2 keinen Schleifkopf enthaltenden Tragelementen 20 gegenüberliegende Stellung. Durch die bereits genannten, in den hier beschriebenen Figuren 1 und 2 nicht sichtbaren, gesteuerten Festhaltemitteln an der Tragvorrichtung 10 werden die in der letzteren eingesetzten Schleifköpfe 11 entriegelt und an die Halteelemente 20 übergeben. Mittels eines Umlaufvorschubes am Werkzeugmagazin 19 gelangen neue Schleifköpfe 11 in eine dem Schleifkopftragteil 23 gegenüberliegende Position und können am letzteren mittels der Festhaltemitteln befestigt werden. Nach dem Zurückschwenken des Ständers 9 kann die Schleifbearbeitung mit neuen Schleifköpfen fortgesetzt werden.

Alle die genannten numerisch gesteuerten Achsen, die gesteuerten Festhaltemittel, die Schwenkbewegung des Ständers 9, der Umlaufvorschub des Werkzeugmagazins werden durch eine nicht dargestellte Steuereinrichtung gesteuert.

Erfindungsgemäss ist vorgesehen, dass die Anzahl der Schleifköpfe 11, die in der Tragvorrichtung 10 gleichzeitig eingesetzt sind, unterschiedlich sein kann. Es ist denkbar, die Tragvorrichtung 10 und die Werkstückeinspannvorrichtung 5 so zu erweitern, dass nicht nur eines oder zwei Werkstücke, sondern drei, vier, usw., gleichzeitig bearbeitet werden können. Je einem Werkstück 2 ist dann ein Schleifkopf 11 zugeordnet. Alle die Werkstücke 2 und die Schleifköpfe 11 erfahren beim Bearbeiten Einstell- und Vorschubbewegungen, die für jedes Werkstück und für jeden Schleifkopf im Betrag und in der Richtung identisch sind.

Das automatische Wechseln der Schleifköpfe erfordert nur kurze Stillstandzeiten. Das Schleifmittel kann optimal der gerade zu bearbeitenden Kontur des Werkstückes angepasst werden. Der Uebergang von Grobschleifen zu Feinschleifen oder Polierschleifen erfordert keinen aufwendigen Schleifbandwechsel im Schleifkopf selbst, sondern lediglich das automatische Tauschen bereits vorbereiteter Schleifköpfe. Verbrauchtes Endlosschleifband kann in einem oder mehreren Schleifköpfen ersetzt werden, während die Maschine mit anderen Schleifköpfen arbeitet. Durch die numerische Steuerung aller der genannten Achsen, d.h. durch die simultane 6-Achsensteuerung, können selbst Fehler, die beim Herstellprozess ungewollt in die Werkstücke hineingearbeitet worden sind, beim Schleifprozess ausgemerzt oder verkleinert werden. Ein vollautomatisches Oberflächenschleifen ist mit dem gezeigten Bearbeitungszentrum ohne die ständige Anwesenheit einer Bedienungsperson möglich. Nebenbei sei erwähnt, dass das ganze Bearbeitungszentrum mit einer Schutzabschrankung 21 umgeben werden kann.

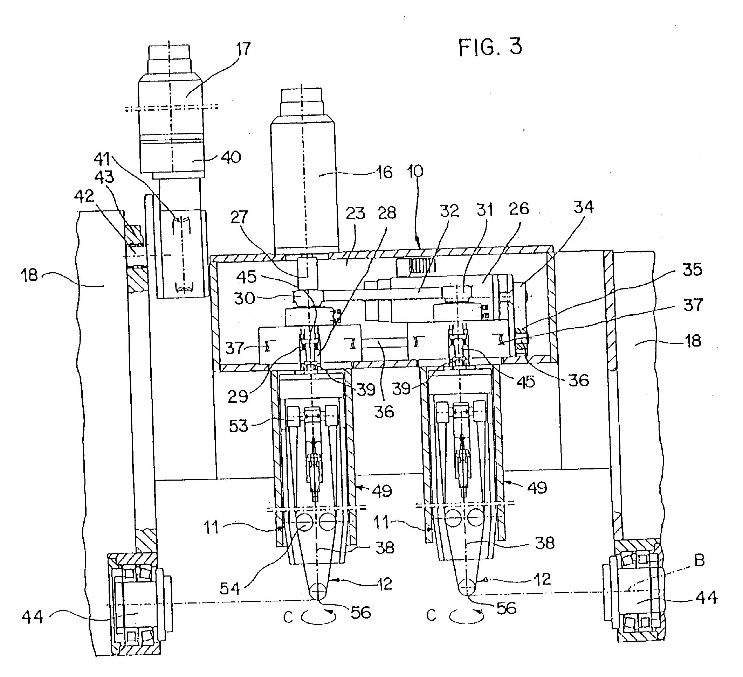

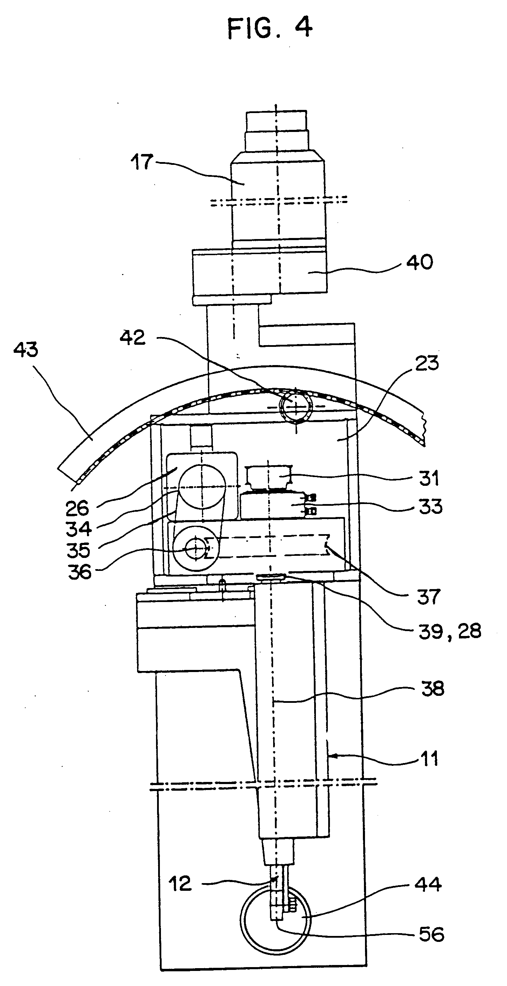

In den Fig. 3 und 4 ist ein wesentlicher Teil des erfindungsgemässen Bearbeitungszentrum, die Tragvorrichtung 10 in einer Seitenansicht und in einer Vorderansicht dargestellt. In der Fig. 3 sind zwischen dem Tragwinkel 18 und dem Schleifkopftragteil 23 zwei Lager 44 sichtbar, um deren Achse B der Schleifkopftragteil neigbar ist. Der Antrieb zum Einstellen eines bestimmten Neigungswinkels, erfolgt über das zweite Antriebsmittel 17, einen Servomotor. Dieser ist am Schleifkopftragteil 23 befestigt und wirkt über einen Zahnriemensprung 40 auf ein Schneckengetriebe 41. Auf der Schneckenradwelle dieses Getriebes ist ein Zahnritzel 42 angeordnet, das mit einem am Tragwinkel 18 fest montierten Zahnkranzsegment 43 in Eingriff steht. Bei eingeschaltetem Motor 17 bewegt sich je nach dessen Drehrichtung das Zahnradritzel 42 längs des Zahnkranzsegmentes 43. Der Schleifkopftragteil 23 mit den eingesetzten Schleifköpfen 11 wird dabei um einen entsprechenden Winkel geneigt. Die genannten Lager 44 sind dabei so angeordnet, dass die Neigungsachse B die den Werkstücken zugewandten Wendepunkte 56 der Schleifmittel 12 tangiert.

Der Antrieb der Schleifköpfe 11 erfolgt über das erste Antriebsmittel 16, beispielsweise einen Elektromotor, welcher ebenfalls am Schleifkopftragteil 23 befestigt ist. Die Antriebswelle 27 dieses Motors wirkt auf ein Antriebsrad 30, welches einem ersten Schleifkopf 11 zugeordnet ist und welches über ein Verbindungsmittel 32, vorzugsweise einen Zahnriemen, mit einem zweiten Antriebsrad 31 verbunden ist. Das zweite Antriebsrad 31 ist einem zweiten Schleifkopf 11 zugeordnet. Durch Kaskadenschaltung weiterer Antriebsräder wäre die Anordnung von weiteren Schleifköpfen 11 modulartig möglich. Von den Antriebsrädern 30, 31 erstreckt sich je eine Welle 45 in Richtung je des zugeordneten Schleifkopfes 11. Am Ende jeder dieser Wellen ist ein Antriebsstirnrad 28 in Längsrichtung der Welle verschiebbar angeordnet. Je eine Druckfeder 29 sorgt dafür, dass jedes der Antriebsstirnräder 28 zum Antreiben der Schleifmittel 12 in jedem der Schleifköpfe 11 mit je einem Kopplungsstirnrad 39, welches an jedem der Schleifköpfe vorhanden ist, in Eingriff gelangt. Ein drittes Antriebsmittel 26, ebenfalls ein Servomotor, wirkt über eine Antriebsscheibe 34 und einen weiteren Zahnriemen 35 auf eine Schneckenwelle 36. Diese letztere ist zum Antreiben von Schneckenrädern 37 bestimmt, die über jedem der Schleifköpfe 11 im Schleifkopftragteil 23 konzentrisch zu den Wellen 45 angeordnet sind. Mit jedem der Schneckenräder 37 sind je Festhaltemittel 49 für jeden der Schleifköpfe 11 drehverbunden. Mit dem im Schleifkopftragteil 23 angeordneten dritten Antriebsmittel 26 sind die Schleifköpfe um die genannte Achse C um den bereits erwähnten beliebigen Winkel drehbar. Dadurch, dass die mit 38 bezeichnete Schleifkopflängsachse, die bezüglich des Schleifmittels 12 sowohl in der Fig. 3 in Seitenansicht als auch in der Fig. 4 in Vorderansicht zugleich die Symmetrieachse ist, mit der Drehachse C zusammenfällt und dadurch, dass die Neigungsachse B des Schleifkopftragteiles 23 tangential zu dem oder den Wendepunkten 56 des oder der Schleifmittel 12 verläuft und jede der Schleifkopflängsachsen in einem rechten Winkel schneidet, haben Veränderungen des Neigungswinkels und der Drehstellung der Schleifköpfe im wesentlichen keine relative Aenderung der X-, Y- und Z-Position gegenüber dem Werkstück zur Folge. Dies vereinfacht die Steuerung.

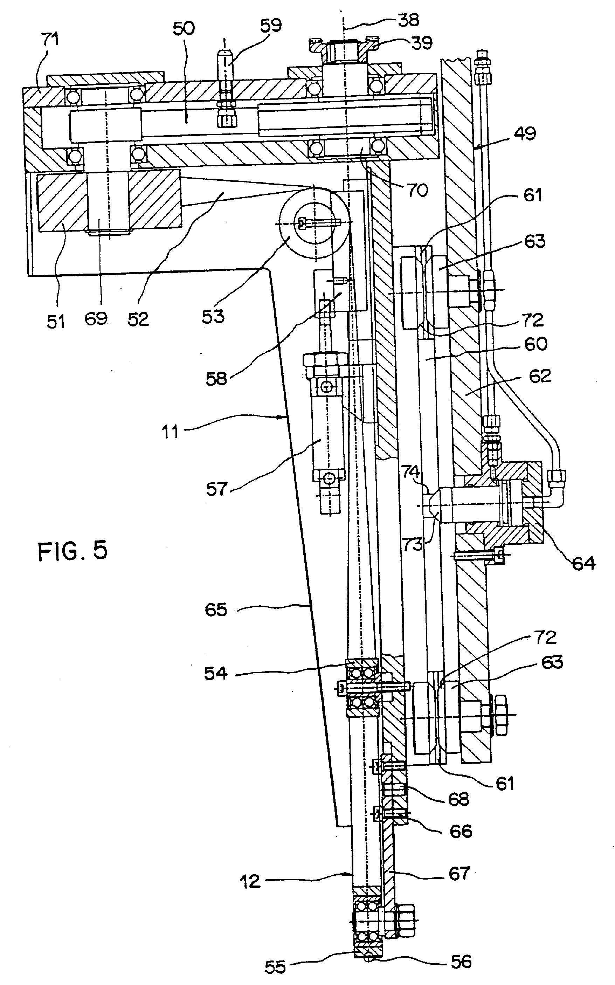

Ein bevorzugtes Ausführungsbeispiel eines erfindungsgemässen Schleifkopfes 11 für das Bearbeitungszentrum ist in der Fig. 5 als Seitenansicht dargestellt. Der Antrieb des Schleifmittels 12, welches ein Endlosschleifband 52 und eine dem Werkstück zugewandte Mantelfläche einer Kontaktrolle 55, um die das Schleifband geschlauft ist, umfasst, erfolgt von einer Antriebsscheibe 51. Diese ist auf einer ersten Welle 69, welche in einem Rahmenteil 71 des Schleifkopfes 11 drehbar gelagert ist, angeordnet. Ueber einen Flachriemenantrieb 50 ist die erste Welle 69 mit einer zweiten Welle 70, die ebenfalls im genannten Rahmenteil 71 drehbar gelagert ist, verbunden. An der zweiten Welle 70 ist das bereits genannte Kopplungsstirnrad 39 angebracht. Das Endlosschleifband 52 ist um die Antriebsscheibe 51 über Umlenkrollen 53, über Leitrollen 54 und um die Kontaktrolle 55 geführt. Die Umlenkrollen 53 sind parallel zur Schleifkopflängsachse 38 auf einem Schlitten 58 verschiebbar angeordnet. Ein mit dem Gehäuse des Schleifkopfes 11 verbundener pneumatisch arbeitender Spannzylinder 57 wirkt zum Spannen des Endlosschleifbandes 52 auf den genannten Schlitten 58. Mit 59 ist der am Rahmenteil 71 angeordnete Luftzufuhrbolzen für den Spannzylinder 57 gekennzeichnet.

Wie bereits gesagt, verläuft die Schleifkopflängsachse 38 in der Seiten- und Vorderansicht symmetrisch zum Schleifmittel 12. Der Schnittpunkt dieser Schleifkopflängsachse mit der dem Werkstück zugewandten Seite der Mantelfläche der Kontaktrolle 55, um die das Schleifband geschlauft ist, ist als Wendepunkt des Schleifmittels mit 56 gekennzeichnet und dient als Steuerungsreferenzpunkt.

Je nach der Struktur des zu bearbeitenden Werkstückes, beispielsweise beim Vorhandensein von Krümmungen mit grossen oder kleinen Radien, müssen Schleifköpfe vorbereitet werden, deren Kontaktrollen 55 unterschiedliche Durchmesser aufweisen. Die Schleifköpfe sind so konstruiert, dass die Kontaktrollen 55 leicht austauschbar sind. Diese sind an einem Ende eines Kontaktrollenträger 67 drehbar gelagert, wobei die Drehachse rechtwinklig zur Schleifkopflängsachse liegt. Der Kontaktrollenträger 67 ist mittels Befestigungsschrauben 66, mit einem Fixierstift 68 lagepositioniert, am Rahmenteil 71 des Schleifkopfes befestigt. Die Kontaktrollenhalter sind so ausgelegt, dass für alle der verwendeten Durchmesser der Kontaktrollen 55 der Steuerungsreferenzpunkt 56 am gleichen Ort auf der Schleifkopflängsachse liegt. Mit anderen Worten ausgedrückt ist die Distanz zwischen dem Steuerungsreferenzpunkt 56 und beispielsweise dem Kopplungsstirnrad 39 unabhängig vom Durchmesser der Kontaktrolle gleich. Im weiteren ist ebenfalls vorgesehen, Kontaktrollen und Schleifbänder mit unterschiedlichen Breiten einzusetzen.

Natürlich wäre es denkbar, obschon hier nicht gezeichnet und nicht dargestellt, anstelle des Endlosschleifbandes und der Kontaktrolle 55 eine Schleifscheibe als Schleifmittel zu verwenden, die im gleichen Sinne wie die Kontaktrolle 55 angeordnet wäre. Die Realisierung eines Antriebes für eine solche Schleifscheibe dürfte für einen Fachmann aus dem Stand der Technik in naheliegender Weise ableitbar sein.

Seitlich am Schleifkopf, im wesentlichen parallel zur Schleifkopflängsachse 38, sind Haltemittel 60, 61 angeordnet, die mit den gesteuerten Festhaltemitteln 49 am Schleifkopftragteil 23 zusammenwirken. Die Haltemittel umfassen eine Führungsschiene 60, an deren oberem und unterem Ende je eine Führungsplatte 61 mit seitlichen abgeschrägten Stirnflächen vorhanden ist. Die Festhaltemittel 49 umfassen im wesentlichen eine Führungsrollentragplatte 62 an dem vier voneinander beabstandete Führungsrollen 63 in einem Rechteck angeordnet sind. Jede der Führungsrollen 63 weist eine Einkerbung 72 auf, die so ausgeführt ist, dass jede der Führungsplatten 61 zwischen zwei in Querrichtung zur Längsachse 38 benachbarten Führungsrollen festhaltbar ist. Mit einem Arretierzylinder 64, beispielsweise einem Hydraulikzylinder, wird zum Fixieren und Festhalten des Schleifkopfes am Schleifkopftragteil ein Arretierstift 73 gegen eine in der genannten Führungsschiene 60 angeordnete Bohrung 74 gepresst.

Der bereits vorgängig beschriebene automatische Schleifkopfwechsel erfolgt genauer in dem Sinne, dass durch das Schwenken des Ständers 9 die im Schleifkopftragteil eingesetzten Schleifköpfe auf die Tragelemente 20 des Werkzeugmagazins 19 (Fig. 2) gelegt werden. Nach dem Zurückziehen des Arretierstiftes 73 aus der Bohrung 74 wird die Tragvorrichtung 10 in der Z-Achsenrichtung soweit nach oben bewegt, bis die Führungsrollen 63 mit den Führungsplatten 61 nicht mehr in Eingriff sind. Jetzt ist es möglich, mit den Tragelementen 20 die entkoppelten Schleifköpfe aus dem Schleifkopftragteil 23 zu entfernen. Neue Schleifköpfe werden der letzteren zugeführt und in umgekehrter Reihenfolge daran arretiert.

Zum Schutze des Schleifkopfes 11 ist dieser mit einer Abdeckung 65 abdeckbar.

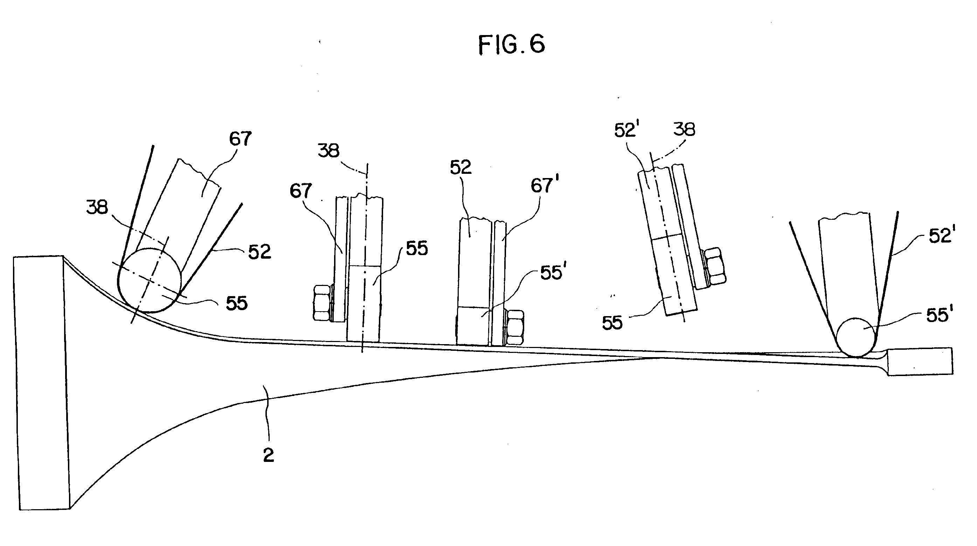

In der Fig. 6 ist eine Turbinenschaufel 2 als Werkstück gezeigt. Es ist sofort aus dieser Figur ersichtlich, dass es, je nach dem Verlauf der jeweils zu bearbeitenden Struktur, zweckmässig ist, Schleifköpfe mit Kontaktrollen 55, 55′ mit unterschiedlichen Durchmessern einzusetzen. Krümmungen am Werkstück 2 mit grossem Radius werden zweckmässigerweise mit einer Kontaktrolle 55 mit grossem Durchmesser, Krümmungen am Werkstück 2 mit einem kleinen Durchmesser müssen hingegen mit einer Kontaktrolle 55′ mit einem entsprechend klein gewählten Durchmesser bearbeitet werden. Je nach Verlauf der Struktur des Werkstückes ist es vorteilhaft, die Schleifrichtung zu ändern. Durch Verstellen des Drehwinkels des Schleifkopfes ist dieser der Schleifrichtung anpassbar. Je nach Bearbeitungsart werden Schleifköpfe, in denen Schleifbänder 52, 52′ mit unterschiedlicher Körnung eingesetzt sind, verwendet.

Es liegt auf der Hand, dass durch die Auswechselbarkeit der Schleifköpfe und das sequentielle Einsetzen von Schleifköpfen mit Schleifmitteln, die dem entsprechenden Bearbeitungsprozess optimal angepasst sind, gegenüber dem Stand der Technik in bezug auf Verkürzung der Stillstandzeiten wesentliche Vorteile bringt. Die Produktivität des Bearbeitungszentrum kann durch das gleichzeitige Bearbeiten mehrerer identischer Werkstücke weiterhin gesteigert werden. Zusätzliche Einsparungen sind dadurch möglich, dass die ständige Anwesenheit einer Bedienungsperson nicht mehr notwendig ist. Als ganz wesentlicher Vorteil dieser Erfindung bleibt aber noch einmal festzuhalten, dass es mit diesem Bearbeitungszentrum möglich ist, Oberflächen nicht nur zu verbessern, sondern Fehler, die während dem Herstellprozess des Werkstückes eventuell entstanden sind, zu verkleinern oder zu beseitigen.

## Patentansprüche

1. Bearbeitungszentrum zum Schleifen von Werkstücken mit komplex geformten Oberflächen, insbesondere von Turbinen oder Triebwerkschaufeln, mit einem Maschinenbett (3), einer Werkstückeinspannvorrichtung (5) mit Supports (5a, 5b) zum drehbaren Einspannen von mindestens einem Werkstück (2), einem Schleifkopf (11) mit einem darin antreibbar angeordneten Schleifmittel (12), einer Steuereinrichtung, mit einer in einer vertikalen Z-Achsenrichtung (13) numerisch auf Mass gesteuerten verschiebbaren Tragvorrichtung (10) zum Tragen wenigstens dieses Schleifkopfes (11), wobei die Tragvorrichtung (10) Antriebselemente (16, 28, 29, 30, 31, 32) mit einem ersten Mittel (16) zum Antreiben eines in diesem Schleifkopf (11) angeordneten Schleifmittels umfasst und wobei der Schleifkopf (11) gegenüber der Z-Achsenrichtung (13) neigbar angeordnet und um eine Schleifkopflängsachse (38) schwenkbar ist, dadurch gekennzeichnet, dass die Werkstückeinspannvorrichtung (5) an einem Kreuzschlitten (4), der in je einer horizontalen X- (6) und Y-Achsenrichtung (7) bewegbar ist, angeordnet ist und zwei der Supports (5a, 5b) aufweist, die voneinander beabstandet in der X-Achsenrichtung relativ zueinander verschiebbar sind, dass die Tragvorrichtung (10) Mittel (49, 62, 63, 64, 73) zum steuerbaren Festhalten und Loslassen des wenigstens einen auswechselbaren Schleifkopfes (11) aufweist, dass ein Werkzeugmagazin (19) vorhanden ist, welchem die Tragvorrichtung (10) zuschwenkbar ist und in welchem mehrere der Schleifköpfe (11) abgelegt sind, und dass Mittel (20, 22) zum Uebergeben und zum automatischen Einsetzen wenigstens einer der Schleifköpfe (11) vom Werkzeugmagazin an die Tragvorrichtung (10) oder umgekehrt vorhanden sind.

2. Bearbeitungszentrum nach Anspruch 1, dadurch gekennzeichnet, dass der in die Tragvorrichtung (10) eingesetzte Schleifkopf (11) gegenüber der Z-Achsenrichtung (13) um wenigstens +/- 45° neigbar ist, wobei die Neigungsachse (14) parallel zur Y-Achsenrichtung (7) verläuft, und dass die Tragvorrichtung (10) ein zweites Antriebsmittel (17), welches zum Einstellen des Neigungswinkels des Schleifkopfes (11) bestimmt ist, umfasst.

3. Bearbeitungszentrum nach Anspruch 1 oder 2, dadurch gekennzeichnet, dass der Schleifkopf (11) um einen beliebigen Winkel um die Schleifkopflängsachse (38) schwenkbar bzw. drehbar ist und dass die Tragvorrichtung (10) ein drittes Antriebsmittel (26), das zum Einstellen des Schwenk- bzw. Drehwinkels des Schleifkopfes (11) bestimmt ist, umfasst.

4. Bearbeitungszentrum nach einem der Ansprüche 1 bis 3, dadurch gekennzeichnet, dass die Einstellung des Neigungswinkels der Tragvorrichtung (10) numerisch gesteuert ist.

5. Bearbeitungszentrum nach einem der Ansprüche 1 bis 4, dadurch gekennzeichnet, dass die Einstellung des Schwenk- bzw. Drehwinkels des Schleifkopfes (11) numerisch gesteuert ist.

6. Bearbeitungszentrum nach einem der Ansprüche 3 bis 5, dadurch gekennzeichnet, dass die Werkstückeinspannvorrichtung (5) zum Einspannen von mehreren Werkstücken (2) vorgesehen ist, dass die Tragvorrichtung (10) zum auswechselbaren Aufnehmen von mehreren Schleifköpfen (11) ausgerüstet ist, wobei je einer der Schleifköpfe (11) je einem der eingespannten Werkstücke (2) zugeordnet ist und dass die genannten Antriebsmittel (16, 17, 26) zum gemeinsamen Antreiben und Einstellen der entsprechenden Winkel aller der Schleifköpfe (11) bestimmt sind, wobei die Einstellbewegungen bei allen Schleifköpfen (11) simultan erfolgen und im Betrag gleich sind.

7. Bearbeitungszentrum nach einem der Ansprüche 1 bis 6, dadurch gekennzeichnet, dass das Schleifmittel (12) eine dem Werkstück (2) zugewandte Mantelfläche einer umlaufenden zylinderförmigen Scheibe (55) aufweist, und dass Haltemittel (60, 61, 74), die zum Eingreifen mit den an der Tragvorrichtung (10) angeordneten Festhaltemitteln (62, 63, 64, 73) bestimmt sind, und ein Kopplungsmittel (39), das zum Koppeln des Schleifmittels (12) mit dem ersten Antriebsmittel (16) der Tragvorrichtung (10) bestimmt ist, vorhanden sind.

8. Bearbeitungszentrum nach Anspruch 7, dadurch gekennzeichnet, dass die Längsachse (38) des Schleifkopfes (11), um welche der letztere schwenk- bzw. drehbar ist, zugleich als Durchmesser durch die Scheibe (55), und mittig durch die achsiale Länge der letzteren verläuft.

9. Bearbeitungszentrum nach Anspruch 7 oder 8, dadurch gekennzeichnet, dass die Scheibe (55) auswechselbar ist, wobei Scheiben (55, 55′) mit unterschiedlichen Durchmessern so in den Schleifkopf (11) einsetzbar sind, dass die dem Werkstück (2) zugewandte Mantelfläche, unabhängig vom Durchmesser der Scheibe (55, 55′), immer am gleichen Ort auf der genannten Längsachse (38) liegt.

10. Bearbeitungszentrum nach Anspruch 9, dadurch gekennzeichnet, dass der genannte Ort der Schnittpunkt der Schleifkopflängsachse (38) mit der Neigungsachse (14), um die der Schleifkopf neigbar ist, ist.

11. Bearbeitungszentrum nach einem der Ansprüche 7 bis 10, dadurch gekennzeichnet, dass die Scheibe eine Kontaktrolle (55) ist, und dass das Schleifmittel (12) im weiteren ein Endlosschleifband (52) umfasst, welches an der dem Werkstück (2) zugewandten Seite um die Kontaktrolle (55) geführt ist.

12. Bearbeitungszentrum nach einem der Ansprüche 7 bis 10, dadurch gekennzeichnet, dass die Scheibe eine Schleifscheibe (55) ist.

13. Bearbeitungszentrum nach einem der Ansprüche 7 bis 12, dadurch gekennzeichnet, dass die Haltemittel (60, 61, 74) seitlich vom Schleifkopf (11), im wesentlichen parallel zur genannten Längsache (38) verlaufend, angeordnet sind.

## Claims

1. Machining centre for grinding workpieces with complex shaped surfaces, in particular turbine or jet engine blades, with a machine bed (3), a workpiece chucking device (5) with supports (5a, 5b) for rotatable chucking of at least one workpiece (2), a grinding attachment (11) with driveable grinding means (12) disposed therein, a control system, a support device (10) displaceable along a vertical Z-axial direction numerically controllable to required measurement to support at least this grinding attachment (11), the support device (10) including drive elements (16, 28, 29, 30, 31, 32) with a first means (16) to drive a grinding means disposed in this grinding attachment (11) and the grinding attachment (11) being disposed such that it is inclinable with respect to a vertical Z-axial direction (13), and is tiltable around a longitudinal axis (38) of the grinding attachment, characterized in that the workpiece chucking device (5) is disposed on a cross slide (4) which is movable in both a horizontal X (6) and Y (7) axial direction, and has two supports (5a, 5b) spaced at a distance from each other and displaceable in the X axial direction relative to each other, in that the support device (10) has means (49, 62, 63, 64, 73) for controllably holding and releasing of the at least one exchangeable grinding attachment (11), in that a tool store (19) is provided to which the support device (10) can be pivoted and in which several of the grinding attachments (11) are housed, and in that there are means (20, 22) for transferring and automatically implementing at least one of the grinding attachments (11) from the tool store to the support device (10), or vice versa.

2. The machining centre according to claim 1, characterized in that the grinding attachment (11) inserted in the support device (10) is inclinable by at least +/- 45° with regard to the Z axial direction (13), the axis of inclination (14) running parallel to the Y axial direction (7), and in that the support device (10) comprises a second drive means (17) which is intended to adjust the angle of inclination of the grinding attachment (11).

3. The machining centre according to claim 1 or 2, characterized in that the grinding attachment (11) is tiltable or rotatable by any angle around the grinding attachment longitudinal axis (38), and in that support device (10) comprises a third drive means (26) which is intended to adjust the angle of tilt or rotation of grinding attachment (11).

4. The machining centre according to one of the claims 1 to 3, characterized in that the adjustment of the angle of inclination of support device (10) is numerically controlled.

5. The machining centre according to one of the claims 1 to 4, characterized in that the adjustment of the angle of tilt or rotation of grinding attachment (11) is numerically controlled.

6. The machining centre according to one of the claims 3 to 5, characterized in that the workpiece chucking device (5) is intended for chucking several workpieces (2), in that the support device (10) is equipped for exchangeable acceptance of several grinding attachments (11), each grinding attachment (11) being associated to one of the chucked workpieces (2), and in that said drive means (16, 17, 26) are intended for combined driving and adjusting of the corresponding angles of all the grinding attachments (11), the adjustment movements taking place simultaneously in all grinding attachments (11) and being identical in amount.

7. Machining centre according to one of the claims 1 to 6, characterized in that the grinding means (12) has a generated surface, facing the workpiece (2), on a rotating cylinder-shaped disk (55), and in that there are retainer means (60, 61, 74) intended to engage with the fixing means (62, 63, 64, 73) disposed on the support device (10), and coupling means (39) intended to couple grinding means (12) with the first drive means (16) of support device (10).

8. Machining centre according to claim 7, characterized in that the longitudinal axis (38) of the grinding attachment (11), around which the latter is tiltable or rotatable, runs both as the diameter through the disk (55) and through the middle of the axial length of the latter.

9. Machining centre according to claim 7 or 8, characterized in that the disk (55) is exchangeable, disks (55, 55′) with different diameters being insertable in grinding attachment (11) such that the generated surface facing workpiece (2), regardless of the diameter of the disk (55, 55′), always lies at the same place on said longitudinal axis (38).

10. Machining centre according to claim 9, characterized in that said place is the point at which the grinding attachment longitudinal axis (38) intersects with the axis of inclination (14), around which the grinding attachment is inclinable.

11. Machining centre according to one of the claims 7 to 10, characterized in that the disk is a contact roller (55) and in that the grinding means (12) also comprise an endless grinding belt (52) which is guided around the contact roller (55) on the side facing the workpiece (2).

12. Machining centre according to one of the claims 7 to 10, characterized in that the disk is a grinding disk (55).

13. Machining centre according to one of the claims 7 to 12, characterized in that the retainer means (60, 61, 74) are disposed laterally from grinding attachment (11), running essentially parallel to said longitudinal axis (38).

## Revendications

1. Centre d'usinage pour le meulage de pièces de surfaces de forme complexe, en particulier d'ailettes de turbines ou de propulseurs, comportant un banc de machine (3), un dispositif de serrage des pièces (5) avec des chariots (5a, 5b) pour le serrage rotatif d'au minimum une pièce (2), une tête de meulage (11) avec un moyen de meulage (12) entraînable monté sur celle-ci, un dispositif de commande, un dispositif de support (10) coulissable commandé numériquement sur une cote dans un axe vertical Z pour supporter au minimum cette tête de meulage (11) le dispositif de support (10) comprenant les éléments d'entraînement (16, 28, 29, 30, 31, 32) avec un premier moyen (16) pour l'entraînement d'un moyen de meulage disposé dans cette tête de meulage (11), la tête de meulage (11) étant disposée de façon inclinable par rapport à la direction de l'axe Z (13) et orientable autour d'un axe longitudinal (38) de la tête de meulage, caractérisé en ce que le dispositif de serrage de la pièce (5) est disposé sur un chariot à déplacements croisés (4), qui est mobile dans chacune des directions horizontales de l'axe X (6) et Y (7) et présente deux chariots (5a, 5b), qui, écartés l'un de l'autre, sont coulissables l'un par rapport à l'autre dans la direction de l'axe X, le dispositif de support (10) présentant des moyens (49, 62, 63, 64, 73) pour le serrage et le desserrage commandables d'au minimum une tête de meulage (11) interchangeable; qu'un magasin d'outils (19) est prévu, lequel est basculable en direction du dispositif de support (10) et dans lequel plusieurs des têtes de meulage (11) sont diposées et en ce que les moyens (20, 22) de transfert et d'utilisation automatiques d'au minimum une des têtes de meulage (11) du magasin d'outils au dispositif de support (10) ou inversement existent.

2. Centre d'usinage selon la revendication 1, caractérisé en ce que la tête de meulage (11) utilisée dans le dispositif de support (10) est inclinable par rapport à la direction de l'axe Z (13) d'au minimum ± 45°, l'angle d'inclinaison (14) étant parallèle à la direction de l'axe Y (7) et en ce que le dispositif de support (10) comprend un second moyen d'entraînement (17) qui est destiné au réglage de l'angle d'inclinaison de la tête de meulage (11).

3. Centre d'usinage selon la revendication 1 ou 2, caractérisé en ce que la tête de meulage (11) est orientable ou pivotable sur un angle quelconque autour de l'axe longitudinal de la tête de meulage (38) et en ce que le dispositif de support (10) comprend un troisième moyen d'entraînement (26) destiné au réglage de l'angle d'orientation ou de rotation de la tête de meulage (11).

4. Centre d'usinage selon l'une des revendications 1 à 3, caractérisé en ce que le réglage de l'angle d'inclinaison du dispositif de support (10) est commandé numériquement.

5. Centre d'usinage selon l'une des revendications 1 à 4, caractérisé en ce que le réglage de l'angle d'orientation ou de rotation de la tête de meulage (11) est commandé numériquement.

6. Centre d'usinage selon l'une des revendications 3 à 5, caractérisé en ce que le dispositif de serrage de pièces (5) est prévu pour le serrage de plusieurs pièces (2), que le dispositif de support (10) est équipé pour recevoir de façon interchangeable plusieurs têtes de meulage (11), respectivement une des têtes de meulage (11) étant attribuée à une des pièces serrées (2) et en ce que les moyens d'entraînement mentionnés (16, 17, 26) sont destinés à l'entraînement et au réglage commun des angles correspondants de toutes les têtes de meulage (11), les mouvements de réglage de toutes les têtes de meulage (11) intervenant de façon simultanée et pour une valeur identique.

7. Centre d'usinage selon l'une des revendications 1 à 6, caractérisé en ce que le moyen de meulage (12) présente une surface latérale regardant une pièce (2) d'une meule cylindrique en rotation (55) et en ce que les moyens de retenue (60, 61, 74), qui sont destinés à agir avec les moyens de retenue (62, 63, 64, 73) disposés sur le dispositif de support (10) et un moyen de couplage (39), qui est destiné au couplage du moyen de meulage (12) avec le premier moyen d'entraînement (16) du dispositif de support (10) existent.

8. Centre d'usinage selon la revendication 7, caractérisé en ce que l'axe longidutinal (38) de la tête de meulage (11), autour duquel cette dernière est pivotable et orientable, constitue simultanément le diamètre passant par la meule (55) et au centre de la longueur axiale de celle-ci.

9. Centre d'usinage selon la revendication 7 ou 8, caractérisé en ce que la meule (55) est interchangeable, les meules (55, 55′) de diamètres différents étant utilisables dans la tête de meulage (11), de manière que la surface latérale regardant la pièce (2) soit disposée indépendamment du diamètre de la meule (55, 55′) toujours au même endroit sur l'axe longitudinal mentionné (38).

10. Centre d'usinage selon la revendication 9, caractérisé en ce que le lieu mentionné est le point d'intersection de l'axe longitudinal de la tête de meulage (38) avec l'axe d'inclinaison (14), autour duquel la tête de meulage est inclinable.

11. Centre d'usinage selon l'une des revendications 7 à 10, caractérisé en ce que la meule est un rouleau de contact (55) et que le moyen de meulage (12) comprend d'autre part une bande de meulage sans fin (52), qui est guidée autour du rouleau de contact (55) sur le côté regardant la pièce (2).

12. Centre d'usinage selon l'une des revendications 7 à 10, caractérisé en ce que la meule est une meule de rectification (55).

13. Centre d'usinage selon l'une des revendications 7 à 12, caractérisé en ce que les moyens de retenue (60, 61, 74) sur le côté de la tête de meulage (11) sont disposés pour l'essentiel parallèlement à l'axe longitudinal mentionné (38).
